# FASCICULE DE BREVET EUROPEEN

(11) **EP 3 011 676 B1**
(45) Date de publication et mention de la délivrance du brevet: **07.08.2019**
(21) Numéro de dépôt: 14730557.7
(22) Date de dépôt: 17.06.2014
(51) Int. Cl.: H04B 1/04, H02H 3/00, H04L 29/00

(54) **PROCÉDÉ DE COMMUNICATION DANS UN RÉSEAU INTERCONNECTANT AU MOINS DEUX GROUPES ÉLECTROGÈNES, ET DISPOSITIF D'INTERFAÇAGE CORRESPONDANT**
VERFAHREN ZUR KOMMUNIKATION IN EINEM NETZ MIT VERBINDUNG VON MINDESTENS ZWEI GENERATOREN UND ENTSPRECHENDE SCHNITTSTELLENBILDUNGSVORRICHTUNG
METHOD OF COMMUNICATING IN A NETWORK INTERCONNECTING AT LEAST TWO GENERATING SETS AND CORRESPONDING INTERFACING DEVICE

(30) Priorité: 17.06.2013 FR 1355659
(43) Date de publication de la demande: 27.04.2016
(73) Titulaire: SDMO Industries, 29200 Brest (FR)
(72) Inventeur: DE SALLIER DUPIN, Jean-François, 53200 Château-Gontier (FR)
(74) Mandataire: Vidon Brevets & Stratégie
(86) Numéro de dépôt international: PCT/EP2014/062764
(87) Numéro de publication internationale: WO 2014/202635

(56) Documents cités:
- EP-A1- 0 918 388
- EP-A1- 1 311 091
- US-A1- 2012 097 666

## Description

### 1. Domaine de l'invention

Le domaine de l'invention est celui du pilotage de groupes électrogènes, et notamment de groupes électrogènes isolés (dit « solo ») avec ou sans inverseur de sources ou regroupés en « centrale d'énergie», et éventuellement couplées à des réseaux de distribution d'électricité en basse tension ou en moyenne tension.

De telles centrales peuvent en particulier être installées dans des hôpitaux, des banques, des bâtiments industriels, des centres de données (ou « datacenters » selon la terminologie anglaise), des centres de production de matières premières (notamment dans le secteur pétrolier, gazier ou minier).

### 2. Art antérieur

Les groupes électrogènes sont commandés à distance, par exemple depuis un autre groupe électrogène ou depuis un ordinateur distant situé notamment dans un poste de commande d'une centrale de groupes électrogènes, dit également « Partie Commune ».

En effet, il est nécessaire de pouvoir intervenir rapidement sur un groupe électrogène, du fait de contraintes de sécurité ou d'enjeux économiques importants. De ce fait, il est primordial que les moyens de communications entre les groupes électrogènes ou entre des groupes électrogènes et une Partie Commune soient opérationnels.

Des solutions de l'art antérieur ont tenté de fournir un réseau de communication inter groupes électrogènes plus fiable. Par exemple, certaines solutions de l'art antérieur consistent à doubler les bus de communication entre les équipements. Cependant, ces solutions ne permettent pas de prémunir le système contre une atteinte physique au réseau. Ainsi, des travaux de voirie affectant un des bus de communication, par exemple pendant le creusage d'une tranchée, affecteront également l'autre bus de communication.

Une solution consiste à mettre en oeuvre des communications par anneau auto-cicatrisant. Cependant, ce type de solution est trop lent pour être utilisé dans un domaine comme celui des groupes électrogènes, où une forte réactivité est nécessaire, d'autant plus que les groupes électrogènes d'une centrale peuvent être assez éloignés les uns des autres. US2012/097666 décrit un procédé permettant de contrôler une pluralité de groupes électrogènes.

EP1311091 décrit un procédé de transport de trames de données en temps réel.

US 2010/0046364 décrit un système comprenant un premier appareil et un deuxième appareil connectés via un chemin de transmission.

### 3. Objectifs de l'invention

L'invention a notamment pour objectif de pallier ces inconvénients de l'art antérieur.

Le but du brevet est donc de fournir un moyen de fiabilisation des communications avec au moins un groupe électrogène.

Un autre objectif de l'invention est de faciliter le pilotage et la maintenance d'un groupe électrogène.

Encore un autre objectif de l'invention est tenir compte des contraintes liées au domaine particulier de l'invention, par exemple aux contraintes pratiques liées à l'implantation des groupes électrogènes, notamment de leur lieu d'implantation, souvent en extérieur, ou à la qualification des opérateurs, qui sont des spécialistes du domaine de l'électricité et non des réseaux de télécommunication, ou au caractère sensible de ce type d'installation.

Un autre objectif est d'obtenir une solution simple, ne mettant pas en oeuvre de protocole de gestion de réseau compliqué, nécessitant une expertise informatique, et c'est à dire une solution adaptée à des personnes en charge de la mise en service et de la maintenance des groupes électrogènes, dans le domaine de compétence n'est pas l'informatique mais le domaine technique de la distribution d'électricité par groupes électrogènes.

Encore un autre objectif est d'obtenir une solution modulaire, adaptée à des ajouts ou retraits fréquents, d'équipements du réseau.

### 4. Exposé de l'invention

L'invention concerne un procédé de communication dans un réseau interconnectant au moins deux groupes électrogènes, chaque groupe électrogène étant relié audit réseau par l'intermédiaire d'au moins un dispositif d'interfaçage apte à émettre et à recevoir des trames de communication, lesdites trames comprenant au moins une donnée de supervision et au moins une donnée d'information.

Selon l'invention, le procédé comprend une étape d'émission, lors de laquelle les mêmes données d'information sont émises au moins deux fois, deux émissions de trames à émettre comportant des données d'information identiques étant séparées temporellement par un intervalle de temps prédéterminé,
et une étape de réception, mettant en oeuvre une élimination systématique de l'une des trames reçues, lorsque deux trames comportant des données d'information identiques ont été reçues.

Ainsi, la solution de l'invention permet de protéger le réseau contre les conséquences de l'apparition d'un défaut, par exemple un défaut apparu sur un bus de communication appartenant au réseau de communication ou sur un module de contrôle d'un des dispositifs de contrôle de groupe électrogène. Ce type de défaut peut apparaître dans les environnements des groupes électrogènes, qui sont généralement installés dans des milieux non protégés (poussière, température, humidité,...), et où les phénomènes électriques et électromagnétiques sont très importants. Des risques de détérioration d'un câble du réseau existent également.

Selon un mode de réalisation particulier de l'invention, ledit réseau est un réseau auto-cicatrisant, apte à modifier un routage d'une trame en cas de détection d'une coupure accidentelle d'une portion dudit réseau, et ledit intervalle de temps prédéterminé est supérieur ou égal à un temps maximum de cicatrisation dudit réseau.

Ainsi, en cas d'échec d'une émission d'une première trame, une seconde trame comportant les mêmes données d'information que la première trame peut être routée de façon différente au routage utilisé lors de l'émission de la première trame.

De telles typologies permettent un fonctionnement dans lequel tous les points d'accès au réseau ont la même valeur (à l'inverse de certaines solutions de l'art antérieur qui privilégient un fonctionnement « maître/esclave »). De tels modes de réalisation sont donc particulièrement adaptés à des mises en oeuvre dans lesquelles les équipements du réseau fluctuent, par exemple parce que les équipements (notamment les groupes électrogènes) sont déplacés, retirés du réseau ou ajoutés dans le réseau de communication, alors que les autres équipements du réseau sont opérationnels et doivent communiquer entre eux.

De plus de tels modes de réalisation offrent l'avantage de limiter le besoin en maintenance du réseau de communication, notamment lorsqu'il s'agit de centrales regroupant un nombre important de groupes électrogènes.

Selon un mode de réalisation particulier de l'invention, le procédé de communication comprend
- une étape de comparaison des données d'information d'une trame courante avec des données d'information d'au moins une trame précédemment reçue, associant à ladite trame courante une information de redondance :
   - ladite information de redondance étant positive, si les données d'information de ladite trame courante sont identiques aux données d'information d'une trame précédemment reçue, ou
   - ladite information de redondance étant négative, si les données d'information d'aucune trame précédemment reçue ne sont identiques aux données d'information de ladite trame courante,
- une étape de traitement de ladite trame reçue, si ladite information de redondance est négative ;
- une étape de suppression de ladite trame reçue, si ladite information de redondance est positive.

Ainsi, l'étape de comparaison permet en particulier de déterminer si les données d'information de la trame en cours de réception, sont identiques à celles d'une trame précédemment reçue, auquel cas le traitement peut simplement consister par exemple en une mémorisation de leur réception, par exemple à des fins de statistiques concernant la fiabilité du réseau, ou s'il s'agit d'une trame comportant des données d'information différentes, dont il convient par exemple d'extraire et d'analyser le contenu.

Selon un mode de réalisation particulier de l'invention, le procédé de communication comprend une étape de contrôle de la réception d'au moins deux trames ayant des données d'information identiques, et une étape de génération d'une alerte lorsque les données d'information d'une trame ont été reçues en un seul exemplaire dans un laps de temps prédéterminé.

Ainsi, le procédé de l'invention permet de détecter aisément un problème ou une anomalie, rendant possible une intervention rapide, si nécessaire, et plus généralement, pour une personne en charge de la surveillance du réseau de communication, et notamment de sa Qualité de Service, d'être averti d'une apparition de défaut, même si celui-ci n'est pas critique et n'a pas d'incidence sur le fonctionnement opérationnel du réseau.

Selon une caractéristique particulière de l'invention, le procédé de communication comprend une étape de stockage dans une mémoire tampon d'au moins une trame reçue pendant un laps de temps au moins égal audit intervalle de temps prédéterminé.

Un tel mode de réalisation de l'invention permet, lors de l'étape de traitement, d'attendre la réception et le traitement d'au moins une trame redondante d'une trame manquante (c'est-à-dire la réception d'une deuxième émission de données d'information dont la première émission a été infructueuse) avant de traiter les autres trames émises après cette trame manquante qui auraient été reçues avant la trame redondante. Ainsi, le procédé de l'invention peut permettre de rétablir en réception la chronologie d'émission des trames.

Selon un mode de réalisation particulier de l'invention, des trames de vérification sont émises périodiquement avec une période prédéfinie par ledit dispositif d'interfaçage et le procédé de communication comprend une étape de contrôle de la réception périodique d'au moins deux trames de vérification, et une étape de génération d'une alerte lorsqu'aucune trame de vérification n'a été reçue pendant ladite période prédéfinie.

Ainsi le procédé de l'invention permet de s'assurer périodiquement du bon fonctionnement de la chaîne de communication avec le dispositif d'interfaçage, et de détecter rapidement le cas échéant une défaillance dans cette chaîne de communication, par exemple une panne du dispositif d'interfaçage ou du réseau de communication.

De telles trames de vérification peuvent par exemple comporter des données d'information prédéfinies.

Selon un autre aspect, l'invention concerne un dispositif d'interfaçage entre au moins un groupe électrogène et un réseau interconnectant au moins deux groupes électrogènes, ledit dispositif d'interfaçage étant apte à émettre et à recevoir des trames de communication, lesdites trames comprenant au moins une donnée de supervision et au moins une donnée d'information.

Selon l'invention, ledit dispositif d'interfaçage comprend :
- des moyens pour émettre au moins deux fois les mêmes données d'information, deux émissions de trames à émettre comportant des données d'information identiques étant séparées temporellement par un intervalle de temps prédéterminé, et
- des moyens de réception, mettant en oeuvre une élimination systématique de l'une des trames reçues, lorsque deux trames comportant des données d'information identiques ont été reçues.

Un tel dispositif d'interfaçage peut par exemple être situé dans la partie commune d'une centrale regroupant un ensemble de groupes électrogènes, ou situé dans une armoire de commande d'au moins un groupe électrogène.

Selon un mode de réalisation particulier de l'invention, le dispositif d'interfaçage met en oeuvre au moins un module de contrôle d'un groupe électrogène et au moins un module de commutation, ledit module de commutation comprenant au moins quatre ports de connexion:
- deux ports de connexion avec ledit réseau ;
- au moins un port de connexion à un desdits modules de contrôle;
- un port de connexion à au moins un élément d'interface distant.

Les ports de connexion avec le réseau peuvent ainsi permettre une communication avec un équipement situé sur le réseau, par exemple avec un autre dispositif d'interfaçage ou avec un module d'interface Homme Machine déporté.

Par « élément d'interface distant », on entend dans la description de l'invention un équipement appartenant à un réseau de communication autre que le réseau interconnectant les groupes électrogènes, ou accessible par cet autre réseau de communication

Ainsi, le port de connexion à au moins un élément d'interface distant peut donner accès à un équipement accessible depuis un autre réseau de communication, par exemple un équipement d'un réseau local comme un périphérique de stockage ou d'impression, ou un équipement d'un réseau WAN, tel qu'un équipement accessible par une liaison internet, par exemple un serveur distant du constructeur du dispositif d'interfaçage.

Selon un mode de réalisation particulier de l'invention, ledit module de contrôle comprend:
- au moins deux ports de connexion avec ledit module de commutation,
   - un premier port étant affecté aux communications entre ledit module de contrôle et d'autres dispositifs d'interfaçage dudit réseau;
   - un second port étant affecté aux communications entre ledit module de contrôle et un élément d'interface distant,
- au moins un troisième port de connexion affecté aux communications entre ledit module de contrôle et un module d'interface Homme machine.

Selon une caractéristique particulière de l'invention, ledit module de contrôle comprend des ports de connexion de type CAN et/ou RS485.

Il peut s'agir de ports de connexion avec le module de commutation ou le module d'interface Homme machine ou avec d'autres modules du dispositif d'interfaçage, comme un module de régulation ou un module de protection ou un module d'entrées- sorties. Il peut également s'agir de ports de connexion avec un module d'un autre dispositif d'interfaçage, par exemple un autre module de contrôle d'un même groupe électrogène ou d'un autre groupe électrogène.

Selon une caractéristique particulière de l'invention, le dispositif d'interfaçage comprend en outre au moins un module d'interface Homme machine communiquant avec ledit module de contrôle.

Dans certains modes de réalisation de l'invention, il peut s'agir d'un module d'interface Homme-Machine appartenant au dispositif d'interfaçage et communiquant, par exemple avec ledit module de contrôle, par le biais du troisième port de connexion.

Il peut également s'agir, dans d'autres modes de réalisation éventuellement complémentaires, d'un module d'interface Homme machine distant, communiquant par exemple avec le module de contrôle par le biais du module de commutation.

Ainsi, il peut s'agir notamment, lorsque le dispositif d'interfaçage est situé par exemple dans une armoire de commande du groupe électrogène, d'un module d'interface Homme-Machine appartenant à un autre dispositif d'interfaçage selon l'invention ou d'un ordinateur ou d'une tablette, utilisant le module de commutation du dispositif d'interfaçage pour dialoguer avec le module de contrôle du dispositif d'interfaçage et donc contrôler le groupe électrogène à distance.

Selon une caractéristique particulière de l'invention, le dispositif d'interfaçage met en oeuvre au moins deux modules de contrôle, aptes à contrôler un même groupe électrogène, un premier desdits modules de contrôle fonctionnant en secours d'un second desdits modules de contrôle.

Ainsi, un tel mode de réalisation permet le contrôle du groupe électrogène soit par un premier module de contrôle, lorsque celui-ci est opérationnel, soit par un second module de contrôle en cas quand d'impossibilité au moins partielle de contrôle du groupe électrogène par ledit premier module de contrôle, par exemple du fait d'un dysfonctionnement du premier module de contrôle, ou d'une rupture de communication entre le premier module de contrôle et le groupe électrogène. De ce fait, un tel mode de réalisation accroît la fiabilité de dispositif d'interface du groupe électrogène.

Selon un mode de réalisation particulier de l'invention, ledit module de commutation comprend deux ports de connexion à un desdits modules de contrôle,
- un premier port étant affecté aux communications entre ledit module de contrôle et d'autres dispositifs d'interfaçage et
- un second port étant affecté aux communications entre ledit module de contrôle et au moins un élément d'interface distant.

Selon une caractéristique particulière de l'invention, ledit module de commutation émet les trames reçues sur ledit premier port ou à destination dudit premier port avec une priorité supérieure à celles des autres trames à émettre en provenance des autres ports de connexion dudit module de commutation.

Ainsi, dans de tels modes de réalisation, la solution de l'invention permet de traiter en priorité des informations particulières, pat exemple des informations liées au groupe électrogène avec lequel s'interface le dispositif de l'invention et donc d'accroître la réactivité du dispositif. En particulier, dans certains modes de réalisation, les trames à émettre par le module de commutation peuvent être émises avec une priorité tenant compte de la priorité des données d'information qu'elles contiennent. Par exemple, des données de régulation et d'automatisme peuvent être considérées comme plus prioritaires, les autres données véhiculées entre dispositifs d'interfaçage ayant en conséquence une priorité plus faible, les données d'interface Homme Machine pouvant avoir une priorité encore plus faible, et les données d'interface avec un élément d'interface distant étant considérées comme les données encore moins prioritaires.

Selon une caractéristique particulière de l'invention, le dispositif d'interfaçage comprend des moyens de programmation du comportement électrique d'au moins un groupe électrogène.

Selon une caractéristique particulière de l'invention, lesdits moyens de programmation mettent en oeuvre une représentation graphique au moins partielle dudit réseau, modifiable via un écran tactile dudit module d'interface Homme Machine.

Selon une caractéristique particulière de l'invention, ladite représentation graphique met en oeuvre une représentation en couleurs, des couleurs distinctes étant affectées en temps réel à chaque élément d'un circuit électrique, selon que le courant électrique circule ou non à l'intérieur de celui-ci.

Ainsi, l'invention permet grâce à une représentation graphique proche de celle adoptée usuellement pour la représentation de schémas électriques, de faciliter la prise en main du dispositif d'interfaçage par des intervenants dont le domaine technique de compétence est l'électricité.

Selon un mode de réalisation particulier de l'invention, lesdits moyens de programmation comprennent des moyens de compilation et des moyens d'exécution d'un programme effectué par un intervenant, lesdits moyens de compilation et d'exécution étant assurées par ledit module de contrôle.

Lorsque le dispositif d'interfaçage comprend plusieurs modules de contrôle, l'un fonctionnant en secours de l'autre, les moyens de compilation et d'exécution peuvent être assurés par chacun des deux modules de contrôle de façon à permettre une « reprise à chaud » plus rapide par le module de contrôle en secours.

Selon une caractéristique particulière de l'invention, lesdits moyens de programmation mettent en oeuvre le langage de programmation "Ladder" (marque déposée).

De tels modes de programmation offrent l'avantage de pouvoir programmer l'interface homme machine du dispositif localement, donc sans nécessiter de moyens supplémentaires. De plus, ils permettent d'éviter certaines difficultés liées à l'utilisation de différents ordinateurs pour la génération et l'utilisation de librairies exécutables, notamment une nécessité de portage de librairies lorsque ces ordinateurs ne fonctionnent pas avec le même système d'exploitation, ou un temps d'attente important avant l'utilisation d'une nouvelle librairie, du fait par exemple des caractéristiques de transmission entre ces ordinateurs (débit de transmission, coupure réseau ...).

Selon un mode de réalisation particulier de l'invention, lesdits moyens de programmation comprennent des moyens de lecture, par synthèse vocale, de tout ou partie d'un programme, de façon à en permettre son analyse à distance et/ou des moyens de réception et de transcription d'instructions vocales.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels:
- la figure la présente le principe général du procédé de communication de l'invention ;
- la figure 1b donne un exemple de trains de trames selon le procédé de communication de l'invention ;
- la figure 2 présente le principe général d'un dispositif d'interfaçage selon l'invention.
- la figure 3 illustre d'une carte électronique d'un module du dispositif selon l'invention.
- la figure 4a illustre les moyens de communication au sein d'un dispositif d'interfaçage ainsi qu'entre ce dispositif d'interfaçage et des équipements distants dans un mode de réalisation particulier ;
- la figure 4b illustre l'émission de différentes trames de communication, par un dispositif d'interfaçage selon l'invention, dans un autre mode de réalisation particulier ;
- la figure 4c illustre l'architecture d'un dispositif d'interfaçage selon l'invention, dans un autre mode de réalisation particulier ;
- la figure 5 présente l'étape de réception du procédé de l'invention, dans un mode de réalisation particulier ;
- la figure 6 présente l'étape de programmation du procédé de l'invention dans un mode de réalisation particulier;
- la figure 7 présente l'étape d'animation d'un objet graphique du procédé de l'invention dans un mode de réalisation particulier;
- la figure 8 présente un exemple de représentation par diagramme "Ladder" d'un objet graphique ;
- la figure 9 présente un exemple de simulation du clic droit sur un écran tactile de programmation "Ladder" d'un objet graphique ;
- la figure 10 présente un exemple de représentation littérale "Ladder" d'un objet graphique.

### 6. Description détaillée

### 6.1 Principe général

L'invention permet notamment de fiabiliser les communications entre groupes électrogènes, en améliorant la Qualité de Service (« QoS ») du réseau de communication inter-équipements, en particulier grâce à un mécanisme d'émissions multiples des données d'information, via au moins deux trames de communication à émettre, deux émissions de trames contenant les mêmes données d'information étant espacées d'un temps supérieur au pire temps de cicatrisation du réseau (ou « worst case recovery time » selon la terminologie anglaise). Ainsi, même si une défaillance survient dans le réseau, l'une des trames émises sera reçue avant l'apparition de la défaillance ou après la cicatrisation du réseau.

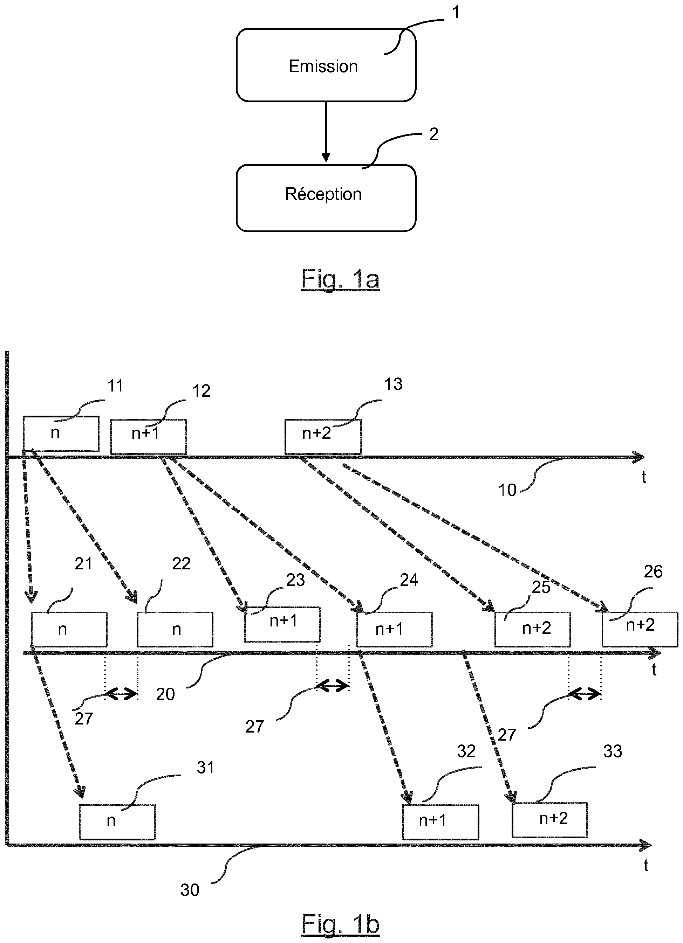

Par exemple, dans le cas particulier de communications via un anneau auto-cicatrisant avec un temps de cicatrisation inférieur à 50 millisecondes, les mêmes données d'informations sont émises au moins deux fois, deux émissions étant espacées d'au moins 50 millisecondes. Les figures 1a et 1b illustrent, sous des points de vue complémentaires, le principe du procédé de communication de l'invention.

Chaque groupe électrogène est relié audit réseau par l'intermédiaire d'au moins un dispositif d'interfaçage apte à émettre et à recevoir des trames de communication.

La figure 1 a illustre les étapes du procédé de l'invention, la figure 1b illustrent l'influence sur les trains de trame à émettre du procédé de l'invention.

Plus précisément, trois axes temporels (10, 20, 30) sont représentés en figure 1b.

Le premier axe temporel 10 représente un train de trames à émettre sur le réseau. Dans l'exemple illustré, le train de trames comporte trois trames consécutives (11, 12, 13), chacune comprenant au moins une donnée de supervision, par exemple un entête (pouvant comprendre, dans le mode de réalisation particulier illustré, une information d'horodatage, un numéro de trames, une adresse MAC du dispositif émetteur de la trame, un identifiant d'un module et/ou d'un dispositif émetteur ou destinataire, etc...) et au moins une donnée d'information.

Selon l'invention, le procédé de communication comprend une étape d'émission 1, illustrée en figure 1a, lors de laquelle les données d'information de chacune desdites trames à émettre (11, 12, 13) sont émises au moins deux fois.

Le second axe temporel 20, illustré en figure 1b, représente le train de trames résultant de l'étape d'émission 1 du procédé de l'invention, qui est émis sur le réseau. Dans l'exemple illustré, le train de trames résultant de l'étape d'émission 1 comporte six trames consécutives (21, 22, 23, 24, 25 et 26), les données d'information des trames 21 et 22, 23 et 24, 25 et 26 étant identiques deux à deux (et les données d'information de chaque couple de trame émise correspondant respectivement aux données d'information des trames à émettre 11, 12, 13). Comme représenté en figure 1b, les deux émissions sur le réseau de trames comportant des données d'information identiques sont espacées d'un intervalle de temps prédéterminé 27.

Cet intervalle de temps prédéterminé est au moins égal au temps de cicatrisation du réseau de façon à ce que, si une défaillance survient dans le réseau, l'une des trames émises soit reçue avant l'apparition de la défaillance ou après la cicatrisation du réseau.

Selon l'invention, le procédé de communication comprend de plus une étape de réception 2, illustrée en figure 1a, mettant en oeuvre une élimination systématique de l'une des trames reçues, lorsque deux trames ayant des données d'information identiques ont été reçues.

Le troisième axe temporel 30, illustré en figure 1b, représente le train de trames résultant de l'étape de réception 2 du procédé de l'invention, illustrée en figure la.

Dans l'exemple illustré en figure 1b, le train de trames résultant de l'étape de réception 2 comporte à nouveau trois trames consécutives (31, 32, 33).

La trame 31 correspond à la trame 21, c'est-à-dire à la première trame « n » émise sur le réseau. La seconde trame émise 22 a été éliminée lors de l'étape de réception 2.

Ainsi, dans le mode de réalisation illustré, l'étape de réception conserve la première trame reçue parmi les trames émises 21 et 22 contenant des données d'information identiques. Un tel mode de réalisation permet de traiter plus rapidement la trame reçue que d'autres modes de réalisation dans lesquels, lorsque plusieurs trames ayant des données d'information identiques sont reçues, seule la dernière trame reçue est conservée.

Dans l'exemple illustré en figure 1b, une défaillance du réseau s'est produite pendant la transmission de la trame 22. De ce fait, celle-ci n'a pas été reçue. Par contre, comme l'intervalle de temps prédéterminé entre l'émission des trames 23 et 24 est égal ou supérieur au temps de cicatrisation du réseau, le réseau a déjà cicatrisé lors de l'émission de la trame 24, qui est donc bien reçue lors de l'étape de réception 2. La seule trame « n+1 » reçue lors de l'étape de réception 2 est donc la trame 32, correspondant à la trame 24 émise.

Enfin, la trame 31 correspond est à la trame 25, c'est-à-dire à la première trame « n +2 » émise sur le réseau. De ce fait, selon le mode de réalisation illustré, la seconde trame émise 26 a été supprimée lors de l'étape de réception 2.

### 6.2 Architecture d'un dispositif de contrôle

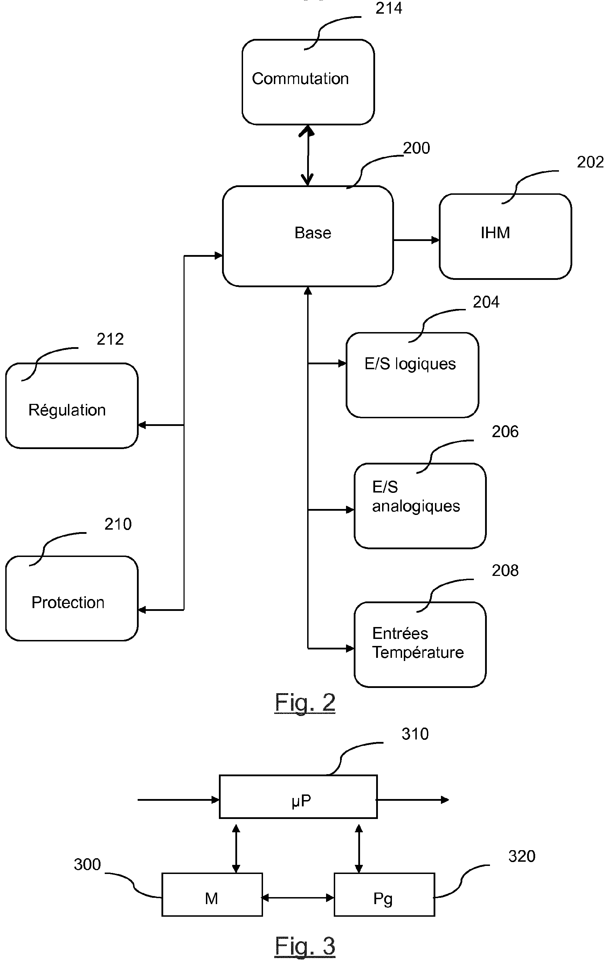

On présente, en liaison avec la figure 2, un exemple d'architecture d'un dispositif d'interfaçage d'au moins un groupe électrogène selon l'invention, selon un mode de réalisation particulier.

Selon les modes de réalisation de l'invention, le dispositif d'interfaçage peut permettre la commande, le contrôle, la régulation et/ou la protection d'un ou de plusieurs groupes électrogènes, suivant de multiples configurations.

Les configurations s'étendent du groupe électrogène isolé (dit « solo ») avec ou sans inverseur de sources, à des groupes électrogènes couplés entre eux, permettant de réaliser des centrales d'énergie pouvant être elles-mêmes couplées à un ou plusieurs réseaux de distribution en basse tension (BT) et en moyenne tension (HTA).

Un tel dispositif d'interfaçage peut notamment être installé sur un pupitre indépendant (par exemple un pupitre S9100 ou S9200 commercialisé par le demandeur), dans un coffret accessible sur au moins une face d'un groupe électrogène, ou sur une armoire dédiée à la gestion d'un ensemble de groupes électrogènes (ou « centrale d'énergie »), par exemple l'armoire « Iroise » commercialisée par le demandeur.

### 6.2.1 Modules du dispositif d'interfaçage

Dans le mode de réalisation illustré, le dispositif d'interfaçage pilote au moins un groupe électrogène. Il comprend plusieurs modules de contrôle, dont un module de base 200 de mesures et d'automatismes électroniques, notamment un module implémentant au moins partiellement la norme de programmation d'automates IEC61131-3, par exemple le module de base « X208 » du demandeur, un module d'interface Homme Machine 202, par exemple un module d'interface Homme Machine comprenant un écran tactile, et un module de régulation 212.

Dans d'autres modes de réalisation, le dispositif peut comprendre plusieurs modules de base et d'IHM, l'un fonctionnant en secours de l'autre par exemple.

Dans certains modes de réalisation, comme dans le mode de réalisation illustré, le dispositif d'interfaçage peut également comprendre des modules de gestion des entrées/sorties logiques 204, de gestion des entrées/sorties analogiques 206, d'acquisition de température 208, et de coupure et de protection 210, par exemple de commande de disjoncteurs. Ces modules sont cependant optionnels.

Selon les modes de réalisation, l'invention est mise en oeuvre au moyen de composants logiciels et/ou matériels. Dans cette optique, le terme "composant" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour les modules concernés.

Un tel composant logiciel est exécuté par un processeur de données d'une entité physique (pour exemple une carte électronique, un circuit intégré, une carte à puce, une carte à mémoire, une carte électronique) et est susceptible d'accéder aux ressources matérielles de cette entité physique (mémoires, supports d'enregistrement, bus de communication, cartes électroniques d'entrées/sorties, interfaces utilisateur, etc...).

De la même manière, un composant matériel correspond à tout élément d'un ensemble matériel (ou hardware) apte à mettre en oeuvre une fonction ou un ensemble de fonctions pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Dans le mode de réalisation illustré, les modules du dispositif d'interfaçage, notamment le module d'interface Homme machine et le module de contrôle, sont constitués par des cartes électroniques.

On présente, en relation avec la figure 3, la structure simplifiée d'une telle carte électronique selon l'invention.

Une carte électronique comprend une mémoire 300 comprenant une mémoire tampon, une unité de traitement 310, équipée par exemple d'un microprocesseur µP, et pilotée par un programme d'ordinateur 320, dont l'exécution met en oeuvre au moins une partie du procédé de communication, selon l'un des modes de réalisation particuliers de l'invention.

A l'initialisation, les instructions de code du programme d'ordinateur 320 sont par exemple chargées dans une mémoire RAM avant d'être exécutées par le processeur de l'unité de traitement 310.

L'unité de traitement 310 reçoit en entrée un entête d'un flux de données.

Le microprocesseur de l'unité de traitement 310 met en oeuvre certaines étapes du procédé de communication décrit précédemment, selon les instructions du programme d'ordinateur 320.

A cette fin, la carte électronique comprend, outre la mémoire tampon 300, les moyens nécessaires à l'implémentation du procédé de communication de l'invention.

Ces moyens sont pilotés par le microprocesseur de l'unité de traitement 310.

### 6.2.2 Interface homme machine

Selon l'invention, l'interface Homme Machine comprend un écran graphique, permettant de piloter au moins un groupe électrogène. Il peut en effet s'agir d'une interface Homme machine située sur un groupe électrogène isolé et permettant la commande de ce groupe électrogène. Il peut également s'agir d'une interface Homme machine relative à au moins un groupe électrogène d'une centrale d'énergie. Une telle interface Homme machine peut par exemple être localisée sur un des groupes électrogènes de la centrale ou sur un autre équipement, par exemple un équipement dédié, nommé dans le reste de la demande « Partie Commune », et permettre le contrôle du groupe électrogène sur lequel elle se situe et/ou des autres groupes électrogènes de la centrale.

Dans le mode de réalisation illustré, l'écran graphique est un écran tactile par exemple, et adapté aux conditions d'exploitation d'un groupe électrogène. En effet, un groupe électrogène est souvent utilisé en extérieur, ce qui implique des contraintes sur le matériel utilisé. Ainsi, l'écran tactile doit être utilisable par fort ensoleillement, pouvoir être résistant aux poussières et/ou aux intempéries, par exemple respecter la norme d'étanchéité IP65. Il doit également être résistant, par exemple aux salissures ou aux chocs, et ne pas être trop réactif. Par exemple, l'impact d'un oiseau se posant sur l'écran ne doit pas être assimilé à d'une action d'un intervenant. Il doit également être adapté à un usage par des personnes amenées à intervenir sur un groupe électrogène et travaillant en extérieur, par exemple une personne se tenant debout, ou portant des gants. Ceci implique des contraintes en terme de taille d'écran et de sensibilité, les intervenants ayant parfois du mal à doser la force de leur appui sur l'écran.

### 6.2.3 Echanges avec le module de contrôle d'un dispositif d'interfaçage

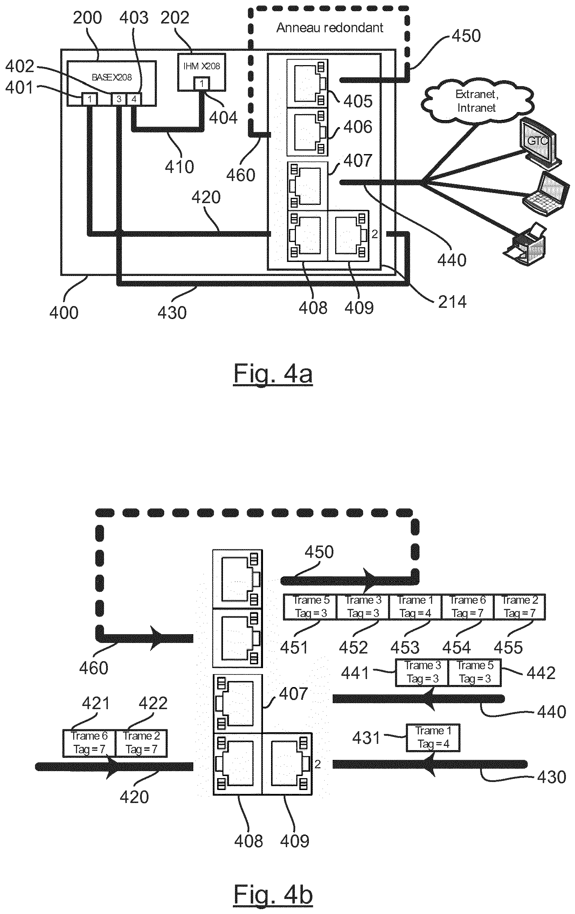

La figure 4a illustre les communications entre les modules d'un dispositif d'interfaçage 400 ainsi qu'entre ces modules et des équipements distants dans un mode de réalisation particulier. Les équipement distants peuvent par exemple être des dispositifs d'interfaçage distants, appartenant au même réseau de groupes électrogènes ou des périphériques distants, n'appartenant pas au réseau de groupes électrogènes, notamment une imprimante.

Dans le mode de réalisation particulier illustré en figure 4a, sont représentés le module de contrôle 200 (par exemple le module de base X208 du Demandeur), le module d'interface Homme Machine 202 et le module de commutation 214 d'un dispositif d'interfaçage 400. Les autres modules éventuellement présents sur un dispositif d'interfaçage, et représentés par exemple en figure 2, n'apparaissent pas en figure 4a. Des communications peuvent cependant bien évidemment être établies entre ces modules et le module de contrôle, par exemple par MODBUS.

Le module de contrôle 200 peut communiquer directement avec le module d'interface Homme Machine 202, par exemple par un lien Ethernet ou CAN. Ainsi, selon la figure 4a, un port de connexion 403 du module de contrôle 200 est relié, par le biais du support de communication dédié 410, à un port de connexion 404 du module d'interface homme machine 202.

Le module de commutation 214 sert d'interface pour l'établissement des commutations entre le module de contrôle 200 et les équipements externes au dispositif d'interfaçage.

Dans le mode de réalisation particulier exposé, des supports de communication différents sont mis en oeuvre pour les communications avec les modules de contrôle d'autres dispositifs d'interfaçage et pour les communications avec un équipement extérieur au réseau de groupes électrogènes, par exemple un équipement appartenant à autre réseau de communication, notamment un élément d'interface distant comme un site Web distant de type accessible par un intranet ou par un extranet, une imprimante, un ordinateur distant, par exemple un poste de travail d'un intervenant distant, ou un ordinateur d'un centre de Gestion Technique centralisée.

Ainsi, dans le mode de réalisation illustré en figure 4a, le module de commutation 214 comprend cinq ports de connexion :
- deux ports de connexion (405, 406) permettant des communications avec le réseau de groupes électrogènes, grâce à deux supports de communication 450 et 460 (formant, dans le cas particulier illustré, un anneau redondant) ;
- un port de connexion 407, permettant des communications avec un élément d'interface distant d'un réseau extérieur, grâce à un support de communication 440 ;
- deux ports de connexion (408, 409), permettant des communications avec le module de contrôle 200, un premier port de connexion 408 donnant accès à un support 420 dédié aux communications entre le module de contrôle 200 et les modules de contrôle du réseau de groupes électrogènes, et un second port de connexion donnant accès à un support 430 dédié aux communications entre le module de contrôle 200 et un élément d'interface distant.

De façon complémentaire, dans le mode de réalisation illustré en figure 4a, le module de contrôle 200 comprend deux ports de connexion (401, 402) avec le module de commutation 214, un premier port 401 donnant accès à un support de communication 420, dédié aux communications avec des modules de contrôle du réseau de groupes électrogènes, et un second port 402 donnant accès à un support de communication 430 dédié aux communications entre le module de contrôle 200 et un élément d'interface distant.

Un tel mode de réalisation permet notamment de traiter certains types de communication avec une priorité différente en privilégiant simplement certains ports de connexion.

Ainsi, dans le mode de réalisation illustré en figure 4b, les trames (421, 422) émises par le module de contrôle 200 sur le support de communication dédié 420, et à destination d'un module de contrôle distant, correspondent à des données d'information susceptibles d'être critiques. Aussi, à ces trames est affectée (par exemple par l'ajout d'un tag spécifique) une priorité supérieure à celle des trames 431 reçues sur le port 409, en provenance du module de contrôle 200 et à destination d'un élément d'interface distant et aux trames 441 et 442 reçues sur le port 407, en provenance d'un élément d'interface distant. Ainsi, l'ordonnancement des trames (451, 452, 453, 454 et 455) émises en sortie du dispositif d'interfaçage tient compte de la priorité des trames reçues par le module de commutation. Par exemple, comme illustré en figure 4b, la priorité d'émission des trames peut être déterminée en fonction de la valeur du tag qui leur est affecté.

De façon complémentaire dans certains modes de réalisation, l'optimisation des communications peut comprendre, en sus d'une affectation de priorité aux ports de connexion du module de commutation, une limitation de la bande passante allouée à certains ports de connexion, non prioritaires.

Dans le mode de réalisation particulier exposé, les supports de communication sont des bus Ethernet. Dans d'autres modes de réalisation, éventuellement complémentaires, il peut s'agir de fibres optiques ou de bus CAN.

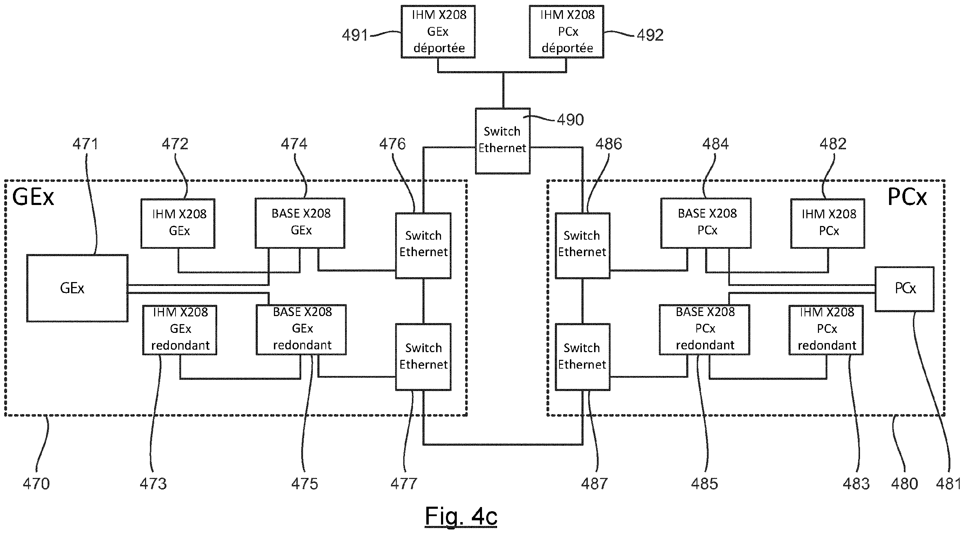

La figure 4c illustre un autre mode de réalisation de l'invention, dans lequel certains modules d'un dispositif d'interfaçage, notamment des modules critiques, sont doublés par des modules redondants, utilisables en cas de défaillance du module doublé.

Selon les modes de réalisation, les modules redondants peuvent être en veille ou partiellement opérationnels pendant le fonctionnement du module doublé. Par exemple, dans le cas du doublement d'un module d'interface Homme Machine par un module d'interface Homme Machine redondant, lorsque le module d'interface Homme Machine doublé est opérationnel, le module d'interface Homme Machine redondant peut permettre de visualiser l'état d'un groupe électrogène mais ne pas offrir de possibilité d'action sur le groupe électrogène.

En figure 4c, sont représentés deux dispositifs d'interface comportant des modules redondants.

Un premier dispositif d'interface 470 s'interface avec un groupe électrogène 471. Un tel dispositif est par exemple situé sur une face du groupe électrogène avec lequel il s'interface.

Dans le mode de réalisation illustré, l'ensemble des modules que comporte le premier dispositif d'interfaçage 470 est doublé, pour former deux chaînes de traitement autonomes, l'une étant opérationnelle et l'autre étant apte à devenir opérationnelle en cas de défaillance de la chaîne opérationnelle. Un tel mode de réalisation permet ainsi de maximaliser la fiabilité du dispositif d'interfaçage 470.

Plus précisément, le dispositif d'interfaçage 470 comprend deux modules d'interface Homme Machine distincts (472, 473), qui dialoguent chacun avec un module de contrôle différent (474, 475), chacun de ces modules de contrôle (474, 475) pouvant contrôler le groupe électrogène 471 et communiquant lui-même avec son propre module de commutation (476, 477). Chacun de ces modules de commutation (476, 477) constitue un point d'accès au réseau de groupes électrogènes.

Dans une variante de ce mode de réalisation, les deux modules de contrôle peuvent partager le même module de commutation.

Le second dispositif d'interfaçage 480 représenté en figure 4C est un dispositif d'interface situé sur une partie commune 481 d'un ensemble de groupes électrogènes (par exemple une armoire de commande donnant accès à plusieurs groupes électrogènes). Son architecture est similaire à celle du premier dispositif d'interfaçage.

Ainsi le second dispositif d'interfaçage comprend deux chaînes de traitement autonomes, en fonctionnement normal/secours, chaque chaîne de traitement comprenant un module d'interface Homme Machine (482, 483), un module de contrôle (484, 485) et un module de commutation (486, 487) s'interfaçant avec la partie commune 481.

Chacun des modules de contrôle des dispositif d'interfaçage représentés en figure 4C peut également être commandé à distance par un module d'interface Homme Machine déportée (491, 492) connecté au réseau de groupes électrogènes.

### 6.3 Présentation de l'étape de réception du procédé de l'invention

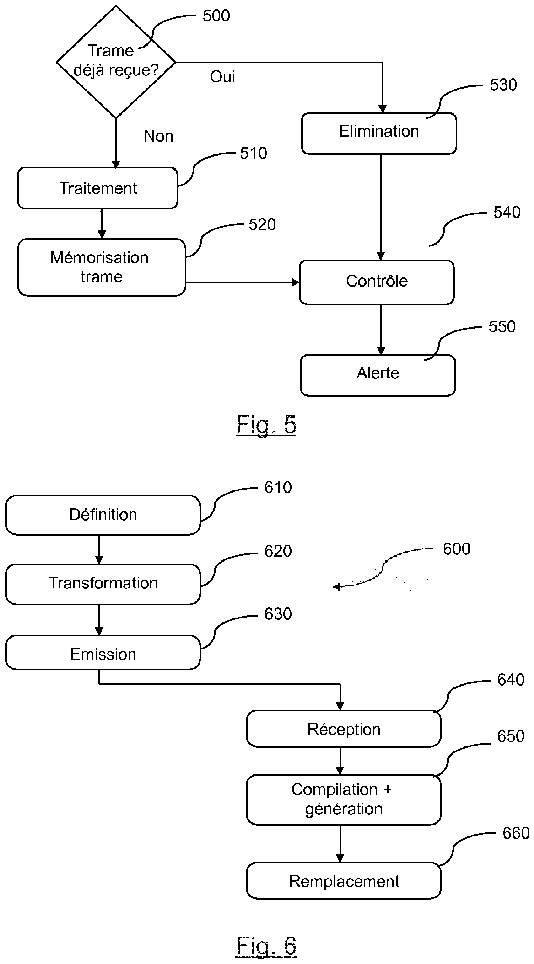

La figure 5 présente l'étape de réception 2 d'une trame de communication du procédé de l'invention, dans un mode de réalisation particulier.

Dans le mode de réalisation illustré en figure 5, l'étape de réception 2 comprend ainsi une étape de comparaison 500 d'un premier ensemble des données d'information contenu par la trame en cours de réception avec un second ensemble des données d'information d'au moins une trame déjà reçue mémorisées lors de l'étape 520 décrite ci-dessous.

Si le premier ensemble des données d'information de la trame n'est identique à aucun des seconds ensembles de données d'information mémorisés (ou n'est pas identique au second ensemble, selon les modes de réalisation), s'il s'agit d'une trame dont les données d'informations qui n'ont pas encore été reçues (donc de la première réception de données d'informations émises plusieurs fois), le procédé met en oeuvre une étape de traitement 510 de la trame reçue. Sinon, dans le mode de réalisation particulier présenté, le premier ensemble de données d'information peut être supprimé (ces données ayant été déjà traitées, lorsqu'elles ont été reçues dans le second ensemble).

Le procédé peut également comprendre, comme dans le mode de réalisation décrit en liaison avec la figure 5, une étape de mémorisation 520 de l'ensemble des données d'information de la trame nouvellement reçue. Outre les données d'information, d'autres données peuvent également être mémorisées. Ainsi, dans certains modes de réalisation particuliers, comme dans le mode de réalisation illustré en figure 5, cette sous-étape peut comprendre la mémorisation de la trame entière reçue, et notamment d'au moins certaines des données de supervision qu'elle contient.

Le nombre d'ensembles de données d'information différents mémorisés est fonction des modes de réalisation de l'invention. Ainsi, dans certains modes de réalisation, seule l'ensemble de données d'information relatif à la dernière trame reçue peut être mémorisé. Dans d'autres modes de réalisation, plusieurs ensembles de données d'information peuvent être mémorisés, par exemple les données d'information contenues dans les « n » dernières trames reçues. Les ensembles de données d'information (ainsi que, dans certains modes de réalisation particuliers, les autres données éventuellement mémorisées) peuvent par exemple être mémorisés dans un buffer circulaire.

Si, lors de l'étape de comparaison 500, les données d'information de la trame en cours de réception sont identiques aux données d'information de l'un des ensembles de données d'information mémorisés, c'est-à-dire en d'autres termes si les données d'information de la trame en cours de réception ont déjà été reçues, le procédé comprend alors une étape d'élimination 530 de la trame reçue.

Dans certains modes de réalisation, l'étape de réception 2 du procédé peut également une étape de contrôle 540 de la réception d'au moins deux trames comportant des données d'information identiques.

En particulier, notamment lorsque l'étape d'émission 1 du procédé comprend l'émission de plus de deux trames comportant des données d'information identiques, l'étape de contrôle 540 peut comprendre un calcul du nombre de fois où un ensemble de données d'information mémorisé a été reçu. Ce calcul peut par exemple être mis en oeuvre grâce à un compteur, initié lors de première réception d'un ensemble de données d'information, puis incrémenté lors de chaque nouvelle réception d'une trame comportant le même ensemble de données d'information.

Dans certains modes de réalisation, cette étape de contrôle 540 peut également comprendre une étape (non représentée en figure 5) d'armement d'une temporisation, associée à l'ensemble de données d'information mémorisé, lorsque le nombre de réception de trames comportant des données d'information identiques est inférieur au nombre prédéterminé d'émissions de trames comportant des données d'information identiques, lors de l'étape d'émission du procédé. Cette temporisation peut par exemple être supérieure au temps maximal nécessaire à la réception des émissions ultérieures de trames compotant les mêmes données d'information que celles mémorisées, elle peut en particulier être supérieure au pire temps de transmission du réseau, en l'absence de coupure réseau.

Dans certains modes de réalisation, l'étape de réception 2 peut également comprendre une étape d'alerte 550 en cas de non réception d'au moins une trame attendue.

Notamment, une alerte peut être générée lorsque des données d'information n'ont pas été reçues autant de fois qu'elles ont été émises, par exemple si, à l'issue de la temporisation armée, la valeur du compteur indiquant le nombre de réception de trames comportant des données d'information identiques est inférieure au nombre prédéterminé d'émissions de trames comportant des données d'information identiques lors de l'étape d'émission du procédé.

Dans d'autres modes de réalisation particuliers, éventuellement complémentaires, dans lesquels une trame particulière est émise périodiquement, une alerte peut être générée lorsque cette trame n'a pas été reçue au bout d'un laps de temps tenant compte de la période d'émission de la trame périodique, du nombre prédéterminé d'émissions de trames comportant des ensembles de données d'information identiques et du pire temps de transmission du réseau, en l'absence de coupure réseau.

### 6.4 Programmation

Dans certains modes de réalisation, il est possible de commander le fonctionnement d'un dispositif d'interfaçage dans plusieurs modes de contrôle, notamment un mode « Programmation », et un mode opérationnel (ou mode « Run »), dans lequel les configurations définies sont utilisées par le dispositif d'interfaçage pour contrôler au moins un groupe électrogène. La transition d'un mode à un autre, ou l'accès à l'un de ces modes de contrôle, peut en particulier être protégée par mot de passe.

Par l'intermédiaire du réseau, et du protocole associé, des données de programmation peuvent être efficacement transmises entre différentes entités connectées au réseau. Il est possible, selon les modes de réalisation, de prévoir que certaines trames spécifiques portent un marqueur indiquant que les données transportées sont des données de programmation.

Le mode de contrôle « Programmation » peut notamment être utilisé lors de l'installation du dispositif d'interfaçage. Dans certains modes de réalisation, il peut également être utilisé ultérieurement, alors que le dispositif d'interfaçage est opérationnel, par exemple lorsque le groupe électrogène est en mode de fonctionnement « Hors Service » ou « Auto », pour modifier une page de visualisation de l'interface Homme Machine du dispositif d'interfaçage.

Lorsque le dispositif d'interfaçage est en mode de contrôle « Programmation », le procédé de communication peut ainsi comprendre une étape de programmation d'objets graphiques, représentatifs d'éléments à visualiser.

La signification de ces objets graphiques peut par exemple être définie par un langage standard de programmation pour automates programmables, par exemple un langage recommandé par la norme industrielle IEC 61131-3 de la Commission électrotechnique internationale (CEI) comme un diagramme "Ladder", une Liste d'instructions (IL), un Texte structuré (ST), des Boîtes fonctionnelles (FBD), une description fonctionnelle séquentielle, dite « Sequential function chart » (SFC).

Dans certains modes de réalisation particuliers, le procédé peut comprendre une étape préalable de téléchargement d'objets graphiques ainsi que leur éventuel transcodage en fichiers de code source, écrits par exemple en langage C. Ces objets graphiques sont ensuite contrôlés par le module d'interface Homme Machine, tandis que les fichiers de code source sont transmis au module de contrôle, pour la génération de librairies exécutables. Ces librairies exécutables sont ensuite utilisées par le processeur du module de contrôle, lorsque le dispositif d'interfaçage est dans un mode de contrôle (par exemple un mode « Run »), pour transmettre au processeur du module d'interface Homme machine les informations dynamiques obtenues des modules d'entrées/sorties qui permettront d'animer de façon dynamique les objets graphiques.

Dans d'autres modes de réalisation, le procédé peut comprendre une étape de définition, par un intervenant, de ces objets graphiques depuis le module d'interface Homme Machine du dispositif d'interfaçage.

La figure 6 ainsi illustre l'étape de programmation 600 du procédé de l'invention, dans un mode de réalisation particulier dans lequel le dispositif d'interfaçage est en mode de contrôle « Programmation », et où les objets graphiques sont définis depuis le module d'interface homme machine du dispositif d'interfaçage.

Dans le mode de réalisation illustré, le procédé comprend ainsi une sous-étape 610 de définition d'objets graphiques. Cette sous-étape 610 peut notamment comprendre la gestion de l'affichage des objets graphiques, notamment l'intégration d'une image (comme un dessin de bouton) ou la définition des paramètres de rendu, et la gestion de la signification des objets graphiques, par exemple l'indication du ou des éléments qu'ils représentent, et de variables logiques associées. Cette sous-étape peut également comprendre une gestion d'éléments de cohérence (respect de règles de nommage, d'une grammaire,...). Dans le mode de réalisation présenté, cette sous-étape s'appuie en particulier sur certains aspects de la norme IEC 61131.

Par exemple, des règles de nommage de variable, notamment des règles énoncées par la norme IEC61131-3 peuvent être appliquées.

Ainsi, le nom d'une variable peut être suivre le format : %L₁ L₂ N₁ .N₂ .N₃, où :
- le préfixe « % » est obligatoire ;
- L₁ représente l'une des lettres I, Q, ou M, celles-ci indiquant respectivement une variable d'entrée physique, une variable de sortie physique et un emplacement mémoire ;
- L₂ est optionnelle et représente l'une des lettres X, B, W ou D, celles-ci indiquant respectivement un booléen, un octet, un entier signé sur 16 bits ou un entier signé sur 32 bits ;
- N₁, N₂, et N₃ représentent des nombres permettant respectivement de désigner module ou bus particulier, une carte, et une entrée.

De plus, une « table des variables » peut être définie pour contenir l'ensemble des noms de variable pouvant être utilisés pour la programmation, de façon à éviter à un intervenant définissant un objet graphique d'avoir à se reporter à une documentation relative au dispositif ou à la norme IEC 61131, et à faciliter un diagnostic ultérieur.

Dans le mode de réalisation présenté, cette sous-étape s'appuie également sur des éléments de base du langage "Ladder", et sur des constructions de Bloc de fonction personnalisés de la norme IEC 61131, notamment des blocs de fonction bistables (ou « Standard bistable function blocks » selon la terminologie anglaise) comme les blocs de fonction bistables dits «Reset dominant » (ou « Bistable RS » selon la terminologie anglaise) et « Set dominant » (ou « Bistable SR » selon la terminologie anglaise), des compteurs (ou « Counters » selon la terminologie anglaise) comme les compteurs dits « Up-counter » ou « Down-counter », des temporisateurs (ou « timers » selon la terminologie anglaise) comme les temporisateurs dits « Pulse Timer » (ou TP), On-Delay Timer (ou TON, ou T--0), ou Off-Delay Timer (ou TOFF, ou 0-T). Des opérateurs de la norme IEC 61131, comme des opérateurs arithmétiques ou des fonctions de sélection, par exemple la fonction « SEL » (pour Binary Selection »), et des opérateurs de comparaison peuvent également être implémentés.

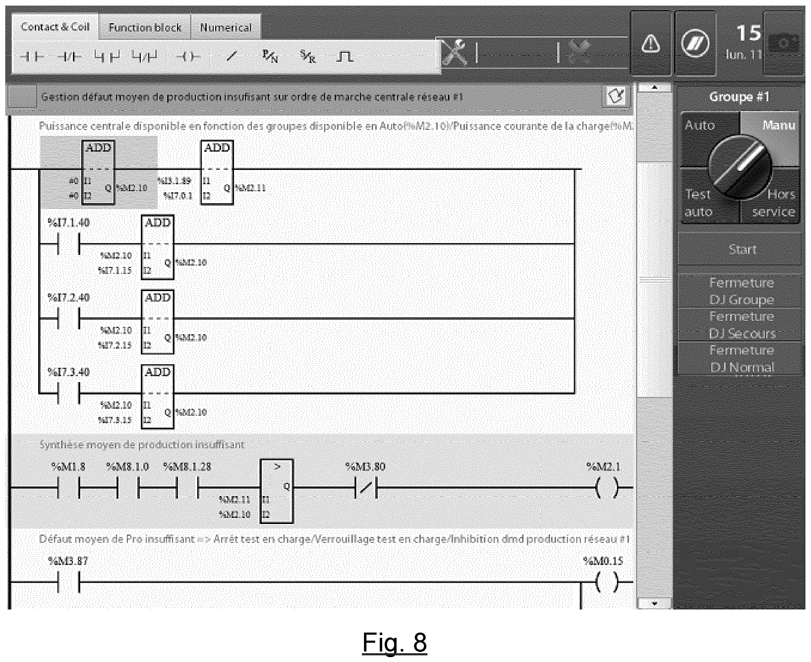

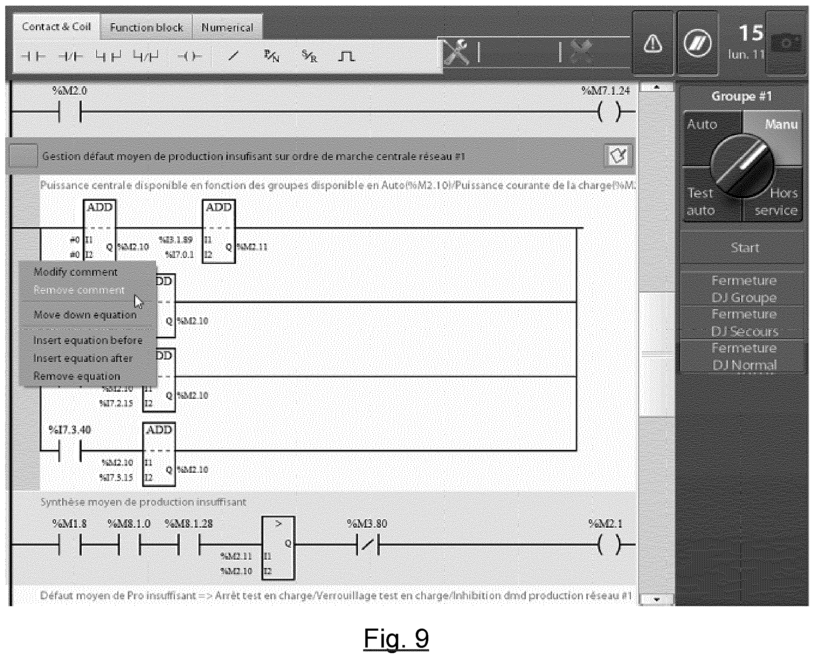

Il peut s'agir d'une définition graphique d'éléments, comme représenté en figure 8. Dans ce cas, des adaptations spécifiques à l'utilisation d'un écran tactile sont mises en oeuvre. Par exemple, comme illustré en figure 9, pour pallier l'absence de souris (et donc de sélection et/ou de désignation par un clic droit), une mise en forme automatique des sélections possibles est dynamiquement affichée sur l'écran, par exemple dans une partie sans représentation ou dans un coin de l'écran tactile.

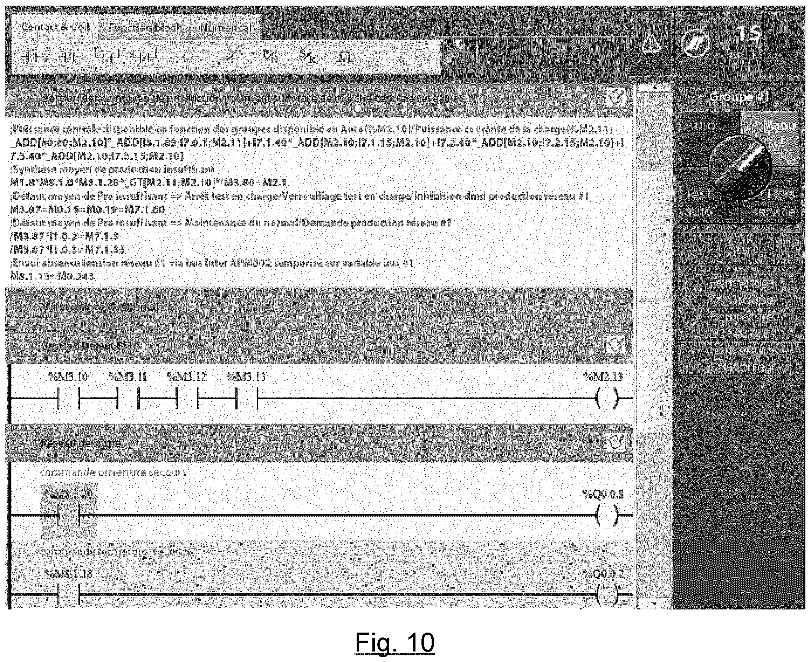

Une interface vocale peut également être proposée pour permettre, par exemple, une dictée par téléphone (lorsque la programmation est effectuée par un intervenant distant notamment). La figure 10 illustre une telle saisie. De la même façon, des moyens de synthèse vocale peuvent être prévus, pour lire (transcrire de façon intelligible, plus précisément) le programme courant, et permettre à un intervenant distant d'en prendre connaissance.

Dans le mode de réalisation présenté, l'étape de programmation 600 comprend également une sous-étape de transformation 610 des objets graphiques définis en code source compréhensible par le module de contrôle du dispositif d'interfaçage. Dans le mode de réalisation représenté, les objets graphiques sont ainsi transformés en langage C, qui est le langage du processeur du module de base.

L'étape de programmation comprend également une sous-étape d'émission 620 des fichiers obtenus vers le processeur du module de contrôle. Dans le mode de réalisation illustré, cette sous-étape comprend un cryptage et une compression des fichiers préalablement à leur envoi.

Dans le mode de réalisation présenté, les étapes de définition 610 de objets graphiques, de transformation 620 de ces objets en fichiers de code C et d'émission 630 de ces fichiers C sont mises en oeuvre par le module d'interface Homme Machine. Dans d'autres modes de réalisation, éventuellement complémentaires, le module d'interface Homme Machine peut également comprendre des moyens de téléchargement ou d'acquisition (par exemple depuis un support de stockage amovible comme une clé USB ou un disque dur externe) d'objets graphiques, qui sont ensuite transformés lors de l'étape de transformation 620 et émis, lors de l'étape démission 630, vers le module de contrôle.

Dans encore d'autres modes de réalisation, les étapes de définition 610 de objets graphiques, de transformation 620 de ces objets en fichiers de code C et d'émission 630 de ces fichiers C peuvent mises en oeuvre par autre dispositif, par exemple un ordinateur.

L'étape de programmation 600 comprend également d'autres sous-étapes qui, dans le mode de réalisation illustré sont mises en oeuvre par le processeur du module de contrôle.

Ainsi, l'étape de programmation 600 comprend une sous-étape de réception 640 des fichiers C associés aux objets graphiques, comprenant éventuellement leur décompression et leur décryptage, une sous-étape 650 de compilation des fichiers reçus, et éventuellement d'autres fichiers déjà présents sur le module de contrôle (par exemple des fichiers associés à d'autres objets graphiques utilisant certains des fichiers reçus) et de génération d'une nouvelle librairie exécutable à partir de ces fichiers.

Enfin, l'étape de programmation comprend une sous-étape de remplacement 660 de la librairie anciennement utilisée dans le mode de contrôle (par exemple un mode « Run ») par la nouvelle librairie générée.

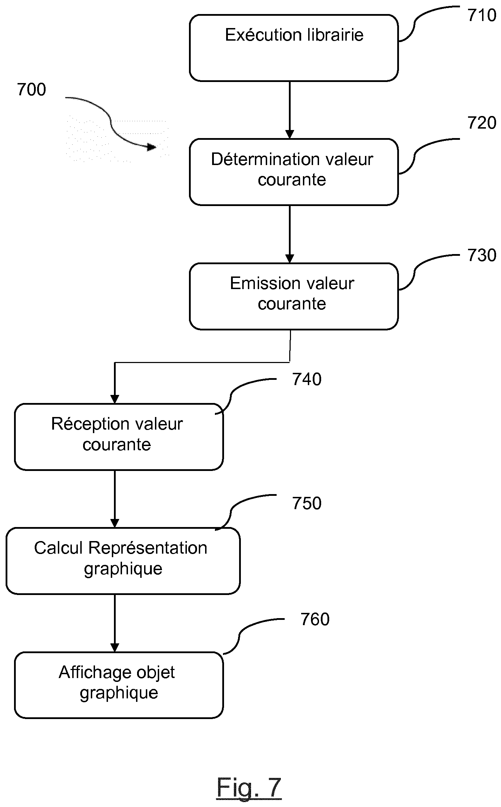

La figure 7 ainsi illustre l'étape d'animation 700 des objets graphiques du procédé de l'invention, dans un mode de réalisation particulier dans lequel le dispositif d'interfaçage est en mode de contrôle (par exemple un mode « Run »), et où les objets graphiques ont été définis depuis le module d'interface homme machine du dispositif d'interfaçage lors de l'étape 600 décrit ci-dessus par exemple.

Dans le mode de réalisation illustré, l'étape d'animation 700 comprend ainsi une sous-étape d'exécution 710 de la librairie exécutable. Cette sous-étape 710 peut comprendre la réception de données provenant des modules d'entrée (notamment des modules d'entrées/sorties logiques et analogiques et des entrées de température) et l'émission de données vers les modules d'entrées/sortie logiques et analogiques.

Dans le mode de réalisation présenté, l'étape d'animation 700 comprend également une sous-étape de détermination 720 de la valeur courante d'au moins une variable associée à un objet graphique et une sous-étape d'émission 730 de cette valeur courante vers le module d'interface Homme Machine. Dans certains modes de réalisation de l'invention, la valeur courante de chaque variable d'un objet graphique, ou de chaque variable dont la valeur a évolué, est transmise périodiquement au module d'interface Homme Machine. Dans d'autres modes de réalisation, les valeurs courantes recalculées et/ou modifiées sont émises vers le module d'interface Homme Machine au fur et à mesure de la réception de données depuis les modules d'entrées.

Dans le mode de réalisation présenté, les étapes d'exécution 710, de détermination 720 et d'émission 730 de valeur courante, sont mises en oeuvre par le module de contrôle.

L'étape d'animation 700 comprend également d'autres sous-étapes qui, dans le mode de réalisation illustré, sont mises en oeuvre par le processeur du module d'interface Homme Machine.

Ainsi, l'étape d'animation 700 comprend une sous-étape de réception 740 de la valeur courante d'au moins une variable d'un objet graphique. Elle comprend également une sous-étape de calcul 750 de la représentation d'un objet graphique. Dans le mode de réalisation particulier illustré, il s'agit notamment de déterminer les couleurs et l'animation du rendu de l'objet graphique. Cette sous-étape comprend notamment un calcul du code couleur associée à chaque variable logique, afin de faciliter le diagnostic d'un intervenant, comme exposé plus haut.

Enfin, l'étape d'animation 700 comprend une sous-étape d'affichage 760 de l'objet graphique.

Selon un autre aspect, l'étape de programmation peut comprendre une étape de programmation de certains aspects du réseau (fonctions des ports, niveaux de priorités, insertion, modification ou retrait d'un élément) et/ou du protocole (durée de temporisation, nombre de répétitions, priorités, ...).

## Revendications

1. Procédé de communication dans un réseau interconnectant au moins deux groupes électrogènes, chaque groupe électrogène étant relié audit réseau par l'intermédiaire d'au moins un dispositif d'interfaçage apte à émettre et à recevoir des trames de communication, lesdites trames comprenant au moins une donnée de supervision et au moins une donnée d'information,
**caractérisé en ce qu'**il comprend une étape d'émission, lors de laquelle les mêmes données d'information sont émises au moins deux fois, deux émissions de trames à émettre comportant des données d'information identiques étant séparées temporellement par un intervalle de temps prédéterminé,
et une étape de réception, mettant en oeuvre une élimination systématique de l'une des trames reçues, lorsque deux trames comportant des données d'information identiques ont été reçues.

2. Procédé de communication selon la revendication 1, **caractérisé en ce que** ledit réseau est un réseau auto-cicatrisant, apte à modifier un routage d'une trame en cas de détection d'une coupure accidentelle d'une portion dudit réseau, et **en ce que** ledit intervalle de temps prédéterminé est supérieur ou égal à un temps maximum de cicatrisation dudit réseau.

3. Procédé de communication selon l'une des revendications 1 ou 2, **caractérisé en ce qu'**il comprend :
- une étape de comparaison des données d'information d'une trame courante avec des données d'information d'au moins une trame précédemment reçue, associant à ladite trame courante une information de redondance :
• ladite information de redondance étant positive, si les données d'information de ladite trame courante sont identiques aux données d'information d'une trame précédemment reçue, ou
• ladite information de redondance étant négative, si les données d'information d'aucune trame précédemment reçue ne sont identiques aux données d'information de ladite trame courante,
- une étape de traitement de ladite trame reçue, si ladite information de redondance est négative ;
- une étape de suppression de ladite trame reçue, si ladite information de redondance est positive.

4. Dispositif d'interfaçage entre au moins un groupe électrogène et un réseau interconnectant au moins deux groupes électrogènes, ledit dispositif d'interfaçage étant apte à émettre et à recevoir des trames de communication, lesdites trames comprenant au moins une donnée de supervision et au moins une donnée d'information,
**caractérisé en ce qu'**il comprend :
- des moyens pour émettre au moins deux fois les mêmes données d'information, deux émissions de trames à émettre comportant des données d'information identiques étant séparées temporellement par un intervalle de temps prédéterminé, et
- des moyens de réception, mettant en oeuvre une élimination systématique de l'une des trames reçues, lorsque deux trames comportant des données d'information identiques ont été reçues.

5. Dispositif d'interfaçage selon la revendication 4, **caractérisé en ce qu'**il met en oeuvre au moins un module de contrôle d'un groupe électrogène et au moins un module de commutation, ledit module de commutation comprenant au moins quatre ports de connexion :
- deux ports de connexion avec ledit réseau ;
- au moins un port de connexion à un desdits modules de contrôle ;
- un port de connexion à au moins un élément d'interface distant.

6. Dispositif d'interfaçage selon la revendication 5, **caractérisé en ce que** ledit module de contrôle comprend :
- au moins deux ports de connexion avec ledit module de commutation,
• un premier port étant affecté aux communications entre ledit module de contrôle et d'autres dispositifs d'interfaçage dudit réseau;
• un second port étant affecté aux communications entre ledit module de contrôle et au moins un élément d'interface distant,
- au moins un troisième port de connexion affecté aux communications entre ledit module de contrôle et un module d'interface Homme machine.

7. Dispositif d'interfaçage selon l'une des revendication 4 à 6, **caractérisé en ce qu'**il met en oeuvre au moins deux modules de contrôle, aptes à contrôler un même groupe électrogène, un premier desdits modules de contrôle fonctionnant en secours d'un second desdits modules de contrôle.

8. Dispositif d'interfaçage selon l'une des revendications 4 à 7, **caractérisé en ce que** ledit module de commutation comprend deux ports de connexion à un desdits modules de contrôle,
- un premier port étant affecté aux communications entre ledit module de contrôle et d'autres dispositifs d'interfaçage, et
- un second port étant affecté aux communications entre ledit module de contrôle et ledit élément d'interface distant.

9. Dispositif d'interfaçage selon l'une des revendications 4 à 8, **caractérisé en ce qu'**il comprend des moyens de programmation du comportement électrique d'au moins un groupe électrogène.

10. Dispositif d'interfaçage selon la revendication 9, **caractérisé en ce que** lesdits moyens de programmation comprennent des moyens de compilation et des moyens d'exécution d'un programme effectué par un intervenant, lesdits moyens de compilation et d'exécution étant assurées par ledit module de contrôle.

## Patentansprüche

1. Verfahren zur Kommunikation in einem Netz, das mindestens zwei Generatoren miteinander verbindet, wobei jeder Generator über mindestens eine Schnittstellenbildungsvorrichtung, die geeignet ist, Kommunikationsrahmen zu senden und zu empfangen, mit dem Netz verbunden wird, wobei die Rahmen mindestens ein Überwachungsdatum und mindestens ein Informationsdatum aufweisen,
**dadurch gekennzeichnet, dass** es einen Schritt des Sendens, bei dem die gleichen Informationsdaten mindestens zweimal gesendet werden, wobei zwei Sendungen von zu sendenden Rahmen, die identische Informationsdaten aufweisen, zeitlich durch ein vorbestimmtes Zeitintervall getrennt werden,
und einen Schritt des Empfangens aufweist, der ein systematisches Beseitigen von einem der empfangenen Rahmen umsetzt, wenn zwei Rahmen, die identische Informationsdaten aufweisen, empfangen worden sind.

2. Verfahren zur Kommunikation nach Anspruch 1, **dadurch gekennzeichnet, dass** das Netz ein selbstheilendes Netz ist, das geeignet ist, im Falle des Erfassens einer zufälligen Unterbrechung eines Abschnitts des Netzes ein Routing eines Rahmens zu modifizieren, und dadurch, dass das vorbestimmte Zeitintervall größer als oder gleich einer maximalen Selbstheilungszeit des Netzes ist.

3. Verfahren nach einem der Ansprüche 1 oder 2, **dadurch gekennzeichnet, dass** es aufweist:
- einen Schritt des Vergleichens der Informationsdaten eines aktuellen Rahmens mit den Informationsdaten mindestens eines zuvor empfangenen Rahmens, wobei dem aktuellen Rahmen eine Redundanzinformation hinzugefügt wird,
• wobei die Redundanzinformation positiv ist, wenn die Informationsdaten des aktuellen Rahmens mit den Informationsdaten mindestens eines zuvor empfangenen Rahmens identisch sind, oder
• wobei die Redundanzinformation negativ ist, wenn die Informationsdaten von keinem zuvor empfangenen Rahmen mit den Informationsdaten des aktuellen Rahmens identisch sind,
- einen Schritt des Verarbeitens des empfangenen Rahmens, wenn die Redundanzinformation negativ ist,
- einen Schritt des Löschens des empfangenen Rahmens, wenn die Redundanzinformation positiv ist.

4. Schnittstellenbildungsvorrichtung zwischen mindestens einem Generator und einem Netz, das mindestens zwei Generatoren miteinander verbindet, wobei die Schnittstellenbildungsvorrichtung geeignet ist, Kommunikationsrahmen zu senden und zu empfangen, wobei die Rahmen mindestens ein Überwachungsdatum und mindestens ein Informationsdatum aufweisen,
**dadurch gekennzeichnet, dass** sie aufweist:
- Mittel, um mindestens zweimal die gleichen Informationsdaten zu senden, wobei zwei Sendungen von zu sendenden Rahmen, die identische Informationsdaten aufweisen, zeitlich durch ein vorbestimmtes Zeitintervall getrennt sind, und
- Mittel zum Empfangen, die ein systematisches Beseitigen von einem der empfangenen Rahmen umsetzen, wenn zwei Rahmen, die identische Informationsdaten aufweisen, empfangen worden sind.

5. Schnittstellenbildungsvorrichtung nach Anspruch 4, **dadurch gekennzeichnet, dass** sie mindestens ein Steuermodul eines Generators und mindestens ein Schaltmodul einsetzt, wobei das Schaltmodul mindestens vier Anschlussports aufweist:
- zwei Anschlussports mit dem Netz,
- mindestens einen Anschlussport mit einem der Steuermodule,
- einen Anschlussport mit mindestens einem entfernten Schnittstellenelement.

6. Schnittstellenbildungsvorrichtung nach Anspruch 5, **dadurch gekennzeichnet, dass** das Steuermodul aufweist:
- mindestens zwei Anschlussports mit dem Schaltmodul,
• wobei ein erster Port den Kommunikationen zwischen dem Steuermodul und anderen Schnittstellenbildungsvorrichtungen des Netzes zugeordnet ist,
• wobei ein zweiter Port den Kommunikationen zwischen dem Steuermodul und mindestens einem entfernten Schnittstellenelement zugeordnet ist,
- mindestens einen dritten Anschlussport, der den Kommunikationen zwischen dem Steuermodul und einem Mensch-Maschine-Schnittstellenmodul zugeordnet ist.

7. Schnittstellenbildungsvorrichtung nach Anspruch 4 bis 6, **dadurch gekennzeichnet, dass** sie mindestens zwei Steuermodule einsetzt, die geeignet sind, einen gleichen Generator zu steuern, wobei ein erstes der Steuermodule als Ersatz für ein zweites der Steuermodule funktioniert.

8. Schnittstellenbildungsvorrichtung nach einem der Ansprüche 4 bis 7, **dadurch gekennzeichnet, dass** das Schaltmodul zwei Anschlussports an eines der Steuermodule aufweist,
- wobei ein erster Port den Kommunikationen zwischen dem Steuermodul und anderen Schnittstellenbildungsvorrichtungen zugeordnet ist, und
- wobei ein zweiter Port den Kommunikationen zwischen dem Steuermodul und dem entfernten Schnittstellenelement zugeordnet ist.

9. Schnittstellenbildungsvorrichtung nach einem der Ansprüche 4 bis 8, **dadurch gekennzeichnet, dass** sie Mittel zum Programmieren des elektrischen Verhaltens von mindestens einem Generator aufweist.

10. Schnittstellenbildungsvorrichtung nach Anspruch 9, **dadurch gekennzeichnet, dass** die Mittel zum Programmieren Mittel zum Kompilieren und Mittel zum Ausführen eines Programms aufweisen, das durch einen Teilnehmer ausgeführt wird, wobei die Mittel zum Kompilieren und zum Ausführen durch das Steuermodul gewährleistet sind.

## Claims

1. Method of communications in a network interconnecting at least two power generators, each power generator being connected to said network by means of at least one interfacing device capable of sending and receiving communications frames, said frames comprising at least one piece of supervision data and at least one piece of information data,
**characterized in that** it comprises a step for sending during which the same pieces of information data are sent at least twice, two operations for sending frames to be sent that comprise identical pieces of information data being separated in time by a predetermined time interval,
and a step for receiving, implementing a systematic elimination of one of the frames received when two frames comprising identical pieces of information data have been received.

2. Method of communications according to claim 1, **characterized in that** said network is a self-recovering network capable of modifying a routing of a frame in the event of detection of an accidental cut in a portion of said network and said predetermined time interval is greater than or equal to a maximum time of recovery of said network.

3. Method of communications according to one of the claims 1 or 2, **characterized in that** it comprises :
- a step for comparing pieces of information data of a current frame with pieces of information data of at least one previously received frame, associating a piece of redundancy information with said current frame:
• said piece of redundancy information being positive if the pieces of information data of said current frame are identical to the pieces of information data of a previously received frame, or
• said piece of redundancy information being negative, if the pieces of information data of no previously received frame are identical to the pieces of information data of said current frame,
- a step for processing said received frame, if said piece of redundancy information is negative;
- a step for eliminating said received frame if said piece of redundancy information is positive.

4. Device for interfacing between at least one power generator and one network interconnecting at least two power generators, said device for interfacing being capable of sending and receiving communications frames, said frames comprising at least one piece of supervision data and one piece of information data,
**characterized in that** it comprises:
- means for sending the same pieces of information data at least twice, two operations for sending frames to be sent that comprise identical pieces of information data being separated in time by a predetermined time interval, and
- means for receiving, implementing a systematic elimination of one of the received frames when two frames comprising identical pieces of information data have been received.

5. Device for interfacing according to claim 4, **characterized in that** it implements at least one control module of a power generator and at least one switching module, said switching module comprising at least four connection ports:
- two ports for connection with said network;
- at least one port for connection with one of said control modules;
- one port for connection with at least one distant interfacing element.

6. Device for interfacing according to claim 5, **characterized in that** said control module comprises:
- at least two ports for connection with said switching module,
• a first port being allotted to the communications between said control module and other interfacing devices of the network;
• a second port being allotted to the communications between said control module and at least one distant interfacing element,
- at least one third port for connection allotted to the communications between said control module and a man/machine interfacing element.

7. Device for interfacing according to one of the claims 4 to 6, **characterized in that** it implements at least two control modules, capable of controlling a same power generator, one of said control modules working as a back-up for a second of said control modules.

8. Device for interfacing according to one of the claims 4 to 7, **characterized in that** said switching module comprises two ports for connection with said control modules:
- a first port being allotted to the communications between said control module and other interfacing devices, and
- a second port being allotted to the communications between said control module and at least one distant interface element.

9. Device for interfacing according to one of the claims 4 to 8, **characterized in that** it comprises means for programming the electrical behavior of at least one power generator.

10. Device for interfacing according to claim 9, **characterized in that** said programming means comprise means for compiling and means for executing a program performed by an operator, said means for compiling and executing being implemented by said control module.
